# FASCICULE DE BREVET EUROPEEN

(11) **EP 2 195 542 B1**
(45) Date de publication et mention de la délivrance du brevet: **26.02.2014**
(21) Numéro de dépôt: 08835007.9
(22) Date de dépôt: 05.09.2008
(51) Int. Cl.: F15B 15/19, F15B 15/22, F15B 15/26, B60R 21/34

(54) **VERIN A COURSE DECLENCHEE, NOTAMMENT POUR SYSTEME DE SECURITE AUTOMOBILE DE PROTECTION DES PIETONS**
AKTUATOR MIT HUBAKTIVIERUNG, INSBESONDERE FÜR EIN AUTOMOBILSICHERHEITSSYSTEM ZUM SCHUTZ VON FUSSGÄNGERN
ACTIVATED-STROKE ACTUATOR, IN PARTICULAR FOR AN AUTOMOBILE SAFETY SYSTEM FOR THE PROTECTION OF PEDESTRIANS

(30) Priorité: 07.09.2007 FR 0757405
(43) Date de publication de la demande: 16.06.2010
(73) Titulaire: HERAKLES, 33185 Le Haillan (FR)
(72) Inventeur: LASPESA, Eric, F- 33160 Saint Medard en Jalles (FR); NADEAU, Jean-Paul, F- 33160 Saint Medard en Jalles (FR); BORG, Evrard, F-33127 Martignas sur Jalle (FR)
(74) Mandataire: Intès, Didier Gérard André
(86) Numéro de dépôt international: PCT/FR2008/051583
(87) Numéro de publication internationale: WO 2009/044049

(56) Documents cités:
- DE-A1-102005 035 006
- DE-U- 7 121 970
- DE-U1-202004 009 772
- FR-A- 2 848 947
- US-A1- 2005 264 036

## Description

L'invention se rapporte à un vérin à course déclenchée plus particulièrement destiné à être intégré à un système de sécurité ayant pour but de protéger un piéton en cas de choc frontal avec un véhicule automobile. L'invention concerne plus particulièrement un perfectionnement d'un tel vérin permettant de ramener ce système de sécurité à sa position d'origine, après déclenchement, lorsque les circonstances le permettent et notamment suite à une fausse détection ou en cas d'évitement de l'obstacle.

Le brevet FR 2 878 212 décrit un système de sécurité pour la protection d'un piéton lorsque celui-ci est percuté par un véhicule automobile. Ce système comprend un mécanisme permettant de soulever rapidement le capot du véhicule automobile en cas de collision. En effet, en cas de collision, la tête du piéton heurte fréquemment le capot du véhicule. Ce choc de la tête sur le capot provoque des déformations du capot. Au-delà d'une certaine déformation, le capot entre en contact avec le bloc-moteur et toutes les pièces rigides qui entourent ce moteur. C'est à ce moment que la tête du piéton subit la plus forte décélération pouvant causer de graves blessures à la victime. C'est pourquoi, le système mentionné ci-dessus est conçu pour soulever brusquement le capot d'une certaine hauteur de manière à éviter que le piéton et notamment sa tête vienne heurter le bloc-moteur après une déformation du capot. Le soulèvement du capot est effectué au niveau de l'arrière de celui-ci, c'est-à-dire du côté du pare-brise, le capot restant fixé à l'avant du véhicule automobile.

Ainsi, un tel dispositif de sécurité, s'il est actionné à temps par des moyens de détection appropriés, permet de soulever le capot de 80 mm au moins en 30 millisecondes, c'est-à-dire dans un intervalle de temps très court après la détection d'un choc imminent.

Il est aussi connu, après soulèvement du capot, de permettre un retour amorti du capot permettant d'accompagner le choc sur le capot de façon à amoindrir l'impact de celui-ci. Ce système d'amortissement en retour est avantageusement combiné au vérin ayant soulevé le capot. De cette façon, l'ensemble constitué par le capot, le mécanisme de soulèvement et le piston du vérin se rétracte sous l'impact (après soulèvement du capot) tout en étant freiné puis bloqué. Le dispositif d'amortissement est agencé dans le corps entre le piston et la tige pour un encombrement minimum et un surcoût négligeable.

Cependant, il arrive que le système de sécurité décrit ci-dessus soit actionné et par conséquent que le capot soit soulevé, sans que l'accident ait lieu, par exemple en cas de détection erronée ou si le piéton ne heurte pas le capot. Dans une telle circonstance, il est souhaitable qu'après l'incident, l'automobiliste puisse repositionner le capot (qui n'a pas été déformé) dans sa position initiale, ceci de façon simple et intuitive.

Par ailleurs, US 2005/0264036 décrit un système lève-capot dans lequel un agencement comprenant une bille logée dans le cavité annulaire définie entre la tige et le corps du vérin est décrit.

L'invention permet le repositionnement du capot.

Selon un premier aspect, l'invention concerne un vérin à course déclenchée du type comportant un corps abritant un piston lié à une tige faisant saillie à l'extrémité dudit corps et des moyens pour propulser ledit piston en réponse à une commande de déclenchement, comportant un agencement de freinage en retour, à seuil inertiel d'actionnement, s'exerçant entre la tige et le corps pour freiner ladite tige seulement lorsque celle-ci est soumise à une force de retour sous une accélération de valeur supérieure à une valeur de seuil, dans lequel ledit agencement de freinage en retour comporte au moins une bille logée dans une cavité annulaire ménagée entre ladite tige et la paroi interne dudit corps, dans lequel ladite cavité comporte deux tronçons adjacents dans le prolongement l'un de l'autre, un premier tronçon proche du piston de hauteur radiale supérieure au diamètre de ladite bille et un second tronçon de hauteur radiale décroissante à partir de l'extrémité dudit premier tronçon, ladite bille s'engageant dans ledit second tronçon lorsque ladite force de retour est appliquée à ladite tige sous une accélération de valeur supérieure à la valeur de seuil précitée, ledit agencement de freinage comprenant en outre des moyens pour maintenir ladite bille dans ledit premier tronçon, au repos, caractérisé en ce que lesdits moyens pour propulser ledit piston en réponse à une commande de déclenchement comportent un générateur de gaz à actionnement pyrotechnique, monté dans ledit corps en regard dudit piston et en ce que lesdits moyens pour maintenir ladite bille dans ledit premier tronçon comprennent un ressort installé dans ledit second tronçon et monté en compression entre ladite bille et une extrémité de ladite cavité.

Selon un deuxième aspect l'invention concerne aussi un vérin à course déclenchée du type comportant un corps abritant un piston lié à une tige faisant saillie à l'extrémité dudit corps et des moyens pour propulser ledit piston en réponse à une commande de déclenchement, comportant un agencement de freinage en retour, à seuil inertiel d'actionnement, s'exerçant entre la tige et le corps pour freiner ladite tige seulement lorsque celle-ci est soumise à une force de retour sous une accélération de valeur supérieure à une valeur de seuil, dans lequel ledit agencement de freinage en retour comporte au moins une bille logée dans une cavité annulaire ménagée entre ladite tige et la paroi interne dudit corps, dans lequel ladite cavité comporte deux tronçons adjacents dans le prolongement l'un de l'autre, un premier tronçon proche du piston de hauteur radiale supérieure au diamètre de ladite bille et un second tronçon de hauteur radiale décroissante à partir de l'extrémité dudit premier tronçon, ladite bille s'engageant dans ledit second tronçon lorsque ladite force de retour est appliquée à ladite tige sous une accélération de valeur supérieure à la valeur de seuil précitée, ledit agencement de freinage comprenant en outre des moyens pour maintenir ladite bille dans ledit premier tronçon, au repos, caractérisé en ce que lesdits moyens pour propulser ledit piston en réponse à une commande de déclenchement comportent un générateur de gaz à actionnement pyrotechnique, monté dans ledit corps en regard dudit piston, en ce que lesdits moyens pour maintenir ladite bille dans ledit premier tronçon comprennent un manchon engagé dans ladite cavité le long dudit second tronçon et coulissant contre la surface interne dudit corps, en ce que ce manchon est muni d'une collerette située à l'extérieur de la cavité et en contact avec ladite tige à l'extérieur de la cavité par l'intermédiaire d'un élément de maintien développant une force de cohésion limitée entre ladite collerette et ladite tige, et en ce que l'agencement de freinage comprend en outre un ressort de force inférieure à ladite force de cohésion réunissant ladite collerette et ladite tige, sollicitant élastiquement ladite bille vers ledit second tronçon de la cavité.

Un tel vérin peut avantageusement prendre place dans un système d'absorption mécanique associé à un capot susceptible d'être soulevé en cas de choc avec un piéton. L'agencement de freinage en retour intégré au vérin est remarquable par sa simplicité de conception associée à une fiabilité accrue. L'agencement de freinage en retour ainsi perfectionné n'entraîne pas l'ajout de pièces nécessitant un usinage complexe et coûteux.

Grâce aux moyens de l'agencement de freinage prévus pour maintenir la bille dans le premier tronçon, au repos, celle-ci ne s'engage dans le second tronçon que lorsque la force de retour est appliquée à la tige avec une accélération de valeur supérieure à la valeur de seuil précitée.

Le cas échéant, l'ensemble coulissant à l'intérieur du vérin et par conséquent tout le mécanisme de soulèvement du capot peut être replacé dans sa position initiale en déplaçant lentement la tige du vérin, pour ne pas dépasser la valeur de seuil précitée. Dans ces conditions, l'agencement de freinage en retour n'est pas sollicité et le capot peut être remis en place sans effort.

Avantageusement, le dispositif comporte en fait une pluralité de billes agencées côte à côte annulairement dans ladite cavité. Pour ajuster la valeur de seuil précitée, on peut ajouter une masselotte annulaire entre le piston et la ou les billes. Le piston étant actionné par un générateur de gaz à déclenchement pyrotechnique, une chambre d'expansion de gaz est généralement définie entre le piston et ce générateur. Avantageusement, on prévoit un orifice de fuite calibrée dans la paroi de cette chambre d'expansion. Le calibrage de cette fuite est à la portée de l'homme du métier. La fuite est choisie pour que la pression exercée pour déplacer la tige du vérin soit maintenue le temps du choc (typiquement quelques millisecondes à quelques dixièmes de secondes) et revienne ensuite progressivement à la pression atmosphérique (au bout de quelques secondes). De cette façon, la chambre d'expansion est ramenée à la pression atmosphérique lorsque l'automobiliste appuie sur le capot pour ramener l'ensemble du mécanisme lié au piston dans sa position initiale.

L'invention sera mieux comprise et d'autres avantages de celle-ci apparaîtront mieux à la lumière de la description qui va suivre de plusieurs modes de réalisation d'un vérin conforme à son principe, donnée uniquement à titre d'exemple et faite en référence aux dessins annexés dans lesquels :
- la figure 1 est une vue générale schématique, en coupe longitudinale d'un vérin conforme à l'invention ;
- les figures 2 à 5 sont des vues schématiques de détail illustrant le fonctionnement de l'agencement de freinage en retour ;
- la figure 6 est une vue semblable à la figure 1 illustrant une variante ;
- la figure 6A est une vue à plus grande échelle de l'encadré A de la figure 6 ;
- la figure 7 est une vue schématique illustrant une autre variante ;
- la figure 8 est une vue de détail illustrant le montage des billes ; et
- les figures 9 et 10 sont des variantes du montage de la figure 8.

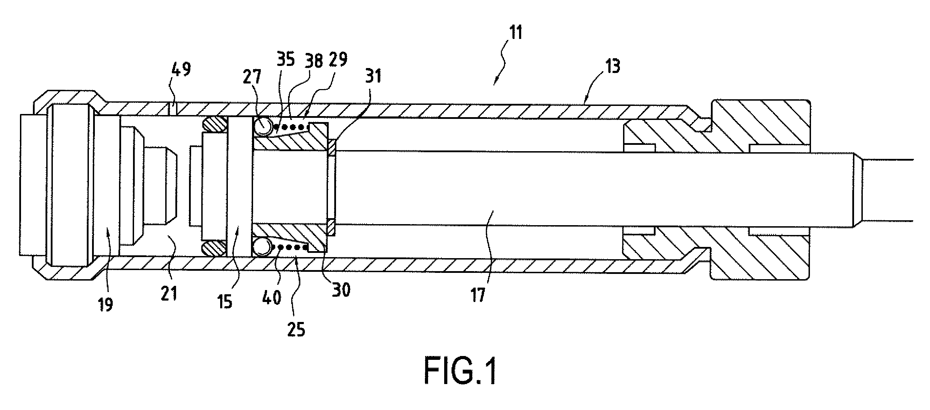

Le vérin 11 à course déclenchée tel que représenté à la figure 1 comporte un corps 13, globalement cylindrique abritant un piston 15 lié à une tige 17 faisant saillie axialement à une extrémité du corps. Ce dernier abrite aussi des moyens pour propulser le piston en réponse à une commande de déclenchement. Dans l'exemple représenté, ces moyens sont constitués par un générateur de gaz 19 à actionnement pyrotechnique monté dans le corps en regard du piston. Le générateur de gaz est serti à l'extrémité du corps qui est opposée à celle où la tige 17 fait saillie axialement. Une chambre d'expansion de gaz 21 est ainsi ménagée entre le générateur et l'extrémité en regard du piston.

Comme mentionné ci-dessus, la tige 17 peut être liée à un mécanisme permettant de soulever le capot d'une automobile en cas de choc frontal avec un piéton.

En outre, le corps 13 abrite un agencement de freinage en retour 25, à seuil inertiel d'actionnement, permettant de freiner voire bloquer la tige 17 en retour, après son déploiement maximum à l'extérieur du corps pour permettre au capot d'accompagner le choc par un mouvement de retour, tout en se déformant. Cet agencement de freinage n'est efficace que si la force qui s'exerce sur la tige, en retour, a une accélération suffisante de valeur supérieure à une valeur de seuil prédéterminée. Cette valeur de seuil est choisie suffisamment faible pour que ce soit toujours le cas lorsque le piéton heurte effectivement le capot.

Dans l'exemple, l'agencement de freinage en retour comporte au moins une bille 27 logée dans une cavité annulaire 29 ménagée entre la tige 17 et la paroi interne du corps. Selon l'exemple décrit sur la figure 1, une pièce annulaire 30 est fixée sur la tige et est en contact avec le piston 15 solidaire de cette même tige. La pièce annulaire est immobilisée dans cette position par une collerette 31 engagée dans une gorge de la tige. Ainsi, pour cet exemple, la cavité annulaire 29 est définie entre le piston 15, la pièce annulaire 30 et la paroi interne du corps 13. Elle comporte, en raison de la forme de la pièce annulaire, deux tronçons adjacents dans le prolongement l'un de l'autre, un premier tronçon 35 proche du piston de hauteur radiale supérieure au diamètre de la bille et un second tronçon 38 de hauteur radiale décroissante à partir de l'extrémité dudit premier tronçon.

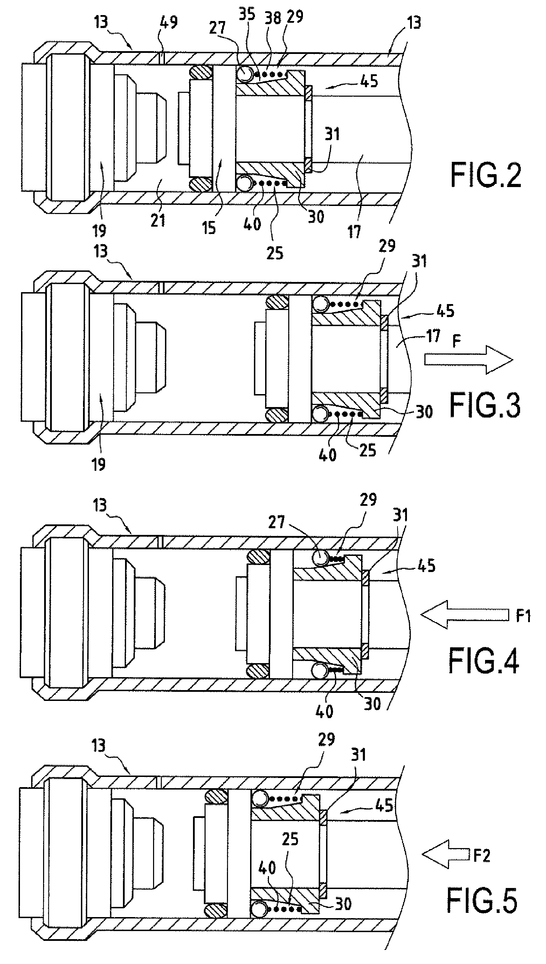

En fait, avantageusement, la cavité renferme une pluralité de billes 27 agencées côte à côte annulairement. En outre, l'agencement de freinage comprend des moyens pour maintenir la ou les billes dans le premier tronçon, au repos. En l'occurrence, un ressort 40 est logé dans la cavité pour solliciter la ou les billes en direction du piston, c'est-à-dire pour que celles-ci demeurent normalement dans ledit premier tronçon 35 de la cavité. Le ressort est installé dans le second tronçon et est monté en compression entre les billes et l'extrémité opposée de la cavité. Cet agencement définit un seuil d'accélération qui doit être dépassé pour que la tige 17 soit freinée en retour lorsqu'elle est soumise à une force tendant à la réintroduire dans le corps 13 après son déploiement par mise à feu du générateur de gaz à actionnement pyrotechnique 19. Ceci est illustré par les figures 2 à 4.

Ainsi, un ensemble coulissant 45 est défini dans le corps ; il est composé du piston 15, de la tige 17 et, selon l'exemple, de la pièce annulaire 30 portée par la tige. L'ensemble coulissant est susceptible d'entraîner les billes 27 et le ressort 40, logés dans la cavité. Initialement, les billes sont maintenues contre le piston sous l'action du ressort. Dans cette situation, les billes sont confinées dans un espace suffisant (premier tronçon 35 de la cavité) pour éviter tout effort de retenue au déplacement de l'ensemble coulissant. C'est la situation illustrée à la figure 2. Lorsque le générateur de gaz pyrotechnique est déclenché (figure 3), l'ensemble coulissant 45 se déplace sous la pression de gaz et la tige est propulsée à l'extérieur du corps, axialement jusqu'à ce que la pièce annulaire, formant butée, rencontre l'extrémité du corps.

Pendant tout ce déplacement, qui se traduit par la levée du capot dans l'application préférentielle envisagée, les billes restent en contact avec le piston et, par conséquent, restent dans ledit premier tronçon 35 de la cavité 29.

En cas de choc se répercutant sur la tige par une force axiale F1 tendant à la faire rentrer à nouveau dans le corps (figure 4), le ressort 40 absorbe une partie de l'énergie mécanique en se comprimant et, le seuil d'accélération précité étant dépassé, les billes 27 s'engagent dans le second tronçon 38 de la cavité annulaire 30. Elles suivent le profil sensiblement tronconique de la pièce annulaire et, en suivant ce profil, les billes viennent frotter contre la surface interne de la paroi du corps cylindrique jusqu'à provoquer la déformation du tube formant le corps 13. Elles finissent par bloquer le déplacement inverse de l'ensemble coulissant. Ce type de freinage progressif avant blocage de la tige, sous l'effet du choc, permet d'accompagner la déformation du capot et contribue à amortir le choc.

La situation de la figure 4 n'est possible que si la force en retour est appliquée sous une accélération suffisante, ce qui est pratiquement toujours le cas lors d'un accident.

En revanche, si le dispositif de soulèvement du capot a été actionné à la suite d'une mauvaise détection ou si le piéton a été évité, le capot a été soulevé mais n'est pas déformé. Il peut donc être refermé par le propriétaire du véhicule. Selon une caractéristique importante de l'invention, l'ensemble coulissant 45 peut être replacé dans sa position initiale en exerçant une faible force F2 sur la tige 17, c'est-à-dire en refermant lentement le capot, pour le faire coulisser vers l'intérieur du corps sans que les billes pénètrent dans ledit second tronçon de la cavité. C'est la situation illustrée sur la figure 5.

Avantageusement, après le déploiement brutal de la tige, le gaz sous pression accumulé dans la chambre d'expansion 21 s'échappe progressivement par un orifice de fuite 49, calibré, jusqu'à ce que la pression revienne progressivement à la pression atmosphérique, ceci au bout de quelques secondes. La chambre d'expansion est donc dépressurisée lorsque le capot est refermé (en l'absence de choc), le vérin ne développant aucune résistance. Le capot peut être refermé sans effort par le conducteur, voire se refermer automatiquement sous l'effet de son propre poids.

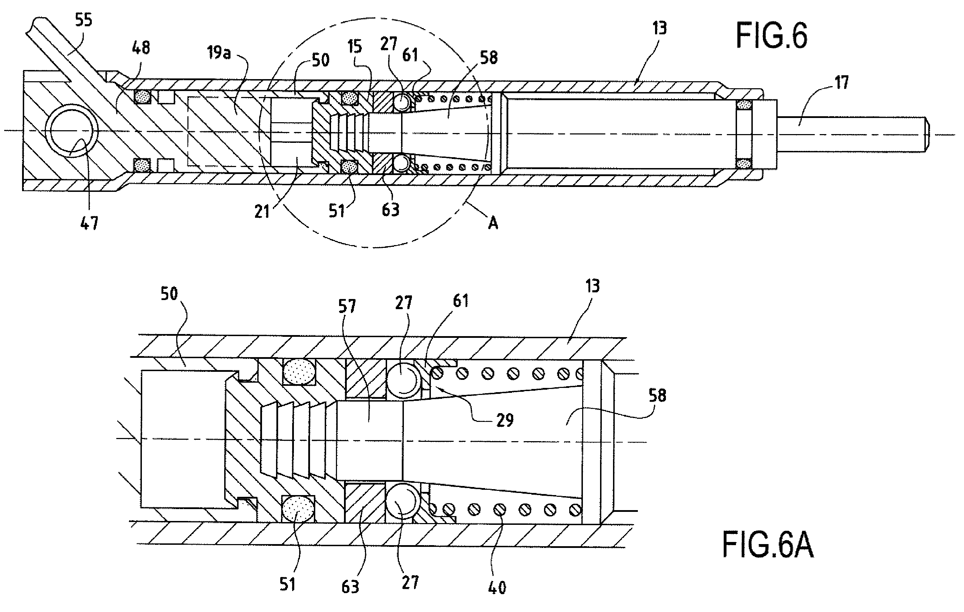

Dans la variante des figures 6 et 6A où les éléments analogues portent les mêmes références numériques, le vérin à course déclenchée comprend un corps cylindrique 13 renfermant un piston 15 solidaire d'une tige 17 qui fait saillie à l'extérieur du corps, à une extrémité axiale de celui-ci. A l'autre extrémité, un générateur de gaz pyrotechnique 19a est intégré dans un socle 48 en matière plastique moulée qui comporte un élément de liaison en forme de douille 50, cassable ou déconnectable reliant le piston au générateur pyrotechnique. Ainsi se trouve définie dans le corps cylindrique, avant déclenchement, une chambre d'expansion 21 de volume initial prédéterminé. Le piston comporte un joint d'étanchéité glissant 51 logé dans une gorge annulaire. Le socle en matière plastique 48 comporte un perçage transversal 47 pour le passage d'un tourillon de montage. Le socle en matière plastique est pourvu d'un cordon électrique bifilaire 55 pour la mise à feu.

La tige 17 est fixée au piston et comporte, au voisinage de celui-ci, une portion cylindrique 57 et une portion tronconique 58 s'élargissant dans la direction de sortie de la tige jusqu'à une collerette en contact glissant avec la surface intérieure cylindrique du corps 13. Les deux sections, cylindrique et tronconique, définissent avec le corps une cavité annulaire 29 comparable à celle qui est représentée sur la figure 1. Cette cavité annulaire abrite le ressort 40 et les billes 27 comme dans le mode de réalisation précédent. Une collerette coulissante 61 est intercalée entre l'extrémité du ressort et les billes. En outre, une masselotte annulaire 63 est disposée entre le piston et les billes. Cette masselotte a pour effet d'amplifier, par inertie, la compression du ressort 40, qui a pour conséquence d'engager les billes dans la seconde section de la cavité sous l'effet de l'accélération du piston résultant du choc du piéton sur le capot.

Le fonctionnement de ce mode de réalisation est semblable au précédent et ne sera pas décrit plus en détail.

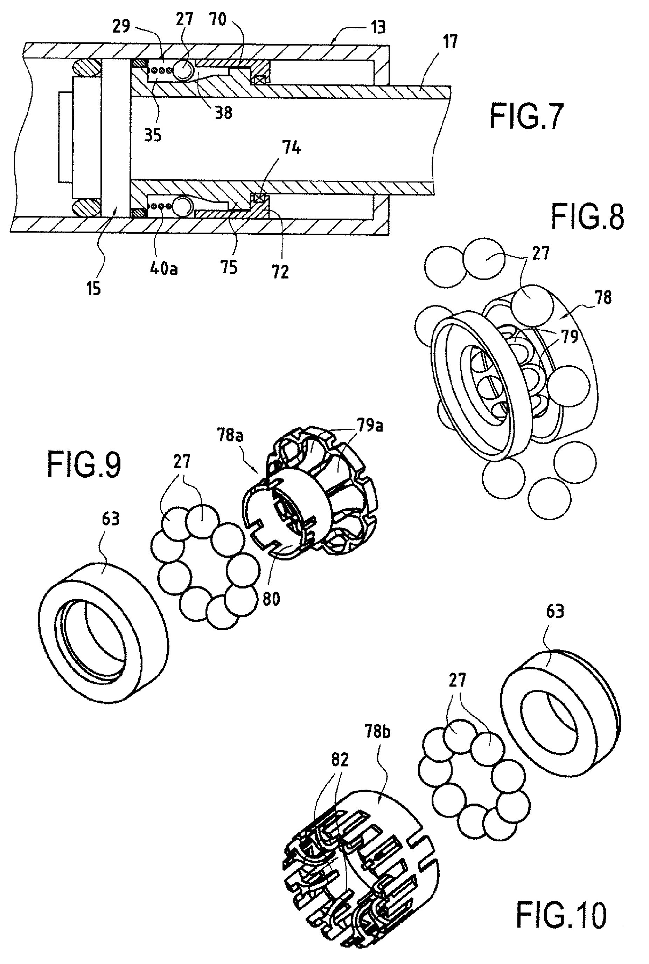

La figure 7 illustre un autre mode de réalisation de l'agencement de freinage en retour. Dans ce mode de réalisation, l'agencement de freinage en retour comporte des moyens pour maintenir la bille dans le premier tronçon de la cavité 29, au repos. Ces moyens comportent un manchon 70 engagé dans la cavité 29 le long dudit second tronçon 38 de celle-ci et coulissant contre la surface interne du corps. Le manchon est muni d'une collerette 72 située à l'extérieur de la cavité au-delà dudit second tronçon et cette collerette est en contact avec la tige 17 à l'extérieur de la cavité. Un élément de maintien 74 développant une force de cohésion limitée entre la collerette 72 et la tige est situé à l'interface entre ces deux éléments. Il est fixé à la collerette.

D'autre part, la ou les billes 27 sont sollicitées élastiquement vers le second tronçon de la cavité par un ressort 40a qui développe une force inférieure à ladite force de cohésion entre la collerette 72 et la tige 17. Le ressort est monté entre le piston 15 et les billes 27. Bien entendu, une collerette annulaire pourrait être intercalée entre le ressort et l'ensemble des billes. Dans l'exemple décrit, l'élément de maintien 74 est un joint de friction annulaire. Le manchon pénètre dans la cavité pour que son extrémité soit au contact des billes lorsque celles-ci se situent dans ledit premier tronçon 35 de la cavité. Avant déclenchement du vérin, la collerette du manchon est en contact avec une butée annulaire 75 définissant l'extrémité du deuxième tronçon de la cavité et le manchon pénètre complètement dans la cavité au contact des billes. Le ressort est comprimé. Cependant, la force du ressort n'est pas suffisante pour vaincre la résistance de l'élément de maintien disposé entre la collerette et la tige. Le fonctionnement est le suivant.

Lorsque le vérin est activé, le piston 15 se déplace avec une force suffisante pour vaincre la résistance de l'élément de maintien 74 et l'ensemble coulissant se déplace entraînant avec lui le manchon 70, la ou les billes étant maintenues en place par ledit manchon.

Lors du choc, la mise en mouvement rapide de l'ensemble coulissant, en retour, n'est pas suivie par le manchon 70 dont l'élément de maintien 74 glisse le long de la tige. Autrement dit, le manchon se désolidarise de la butée 75 définie dans la tige et n'appuie plus sur les billes. Le ressort 40a se détend et pousse les billes 27 dans le second tronçon de la cavité provoquant l'effet amortissant et bloquant.

En revanche, si le choc n'a pas lieu, il est possible de ramener le vérin dans sa position initiale en imprimant une force sur la tige 17 avec une accélération suffisamment faible pour que l'élément de maintien 74 ne coulisse pas sur la tige. Par conséquent, le manchon reste accouplé à la butée définie sur la tige pendant le mouvement de retour de l'ensemble coulissant, et les billes sont maintenues dans le premier tronçon.

Comme le montrent les figures 8 à 10, les billes peuvent avantageusement être logées dans un support annulaire 78 formant barillet monté mobile dans la cavité. Le support comporte des alvéoles 79 recevant les billes. Selon l'exemple de la figure 9, le support 78a comporte un tronçon cylindrique 80 prolongé par une pluralité d'alvéoles 79a, chaque alvéole recevant une bille. La masselotte 63 vient se loger sur le tronçon cylindrique 80 en maintenant les billes dans leurs alvéoles. On dispose ainsi d'un sous-ensemble facile à monter dans la cavité. Au moment du déclenchement le barillet 78 ou 78a se rompt et les billes s'engagent dans ledit second tronçon de la cavité.

Le mode de réalisation de la figure 10 est semblable. Il comprend un manchon cylindrique 78b muni intérieurement de nervures 82 flexibles permettant l'insertion des billes 27. La masselotte 63 vient se loger dans une portion cylindrique de ce manchon ; elle permet de maintenir les billes en position.

Il est à noter que le barillet peut être maintenu centré par le ressort. De cette façon, il n'est pas en contact, avant fonctionnement, avec la partie tronconique du second tronçon de la cavité. On évite ainsi les effets de "gommage" apparaissant entre deux pièces en contact au repos pendant une période de temps longue. Ces effets de gommage s'opposent aux déplacements, c'est la raison pour laquelle il est avantageux de les éviter.

## Revendications

1. Vérin à course déclenchée du type comportant un corps (13) abritant un piston (15) lié à une tige (17) faisant saillie à l'extrémité dudit corps et des moyens (19) pour propulser ledit piston en réponse à une commande de déclenchement, comportant un agencement de freinage en retour (25), à seuil inertiel d'actionnement, s'exerçant entre la tige (17) et le corps (13) pour freiner ladite tige seulement lorsque celle-ci est soumise à une force de retour sous une accélération de valeur supérieure à une valeur de seuil, dans lequel
ledit agencement de freinage en retour comporte au moins une bille (27) logée dans une cavité annulaire (29) ménagée entre ladite tige et la paroi interne dudit corps, dans lequel
ladite cavité comporte deux tronçons adjacents dans le prolongement l'un de l'autre, un premier tronçon (35) proche du piston de hauteur radiale supérieure au diamètre de ladite bille et un second tronçon (38) de hauteur radiale décroissante à partir de l'extrémité dudit premier tronçon, ladite bille s'engageant dans ledit second tronçon lorsque ladite force de retour est appliquée à ladite tige (17) sous une accélération de valeur supérieure à la valeur de seuil précitée, ledit agencement de freinage comprenant en outre des moyens pour maintenir ladite bille dans ledit premier tronçon, au repos,
**caractérisé en ce que** lesdits moyens pour propulser ledit piston en réponse à une commande de déclenchement comportent un générateur de gaz à actionnement pyrotechnique (19), monté dans ledit corps en regard dudit piston et
**en ce que** lesdits moyens pour maintenir ladite bille dans ledit premier tronçon comprennent un ressort (40) installé dans ledit second tronçon (38) et monté en compression entre ladite bille et une extrémité de ladite cavité.

2. Vérin à course déclenchée du type comportant un corps (13) abritant un piston (15) lié à une tige (17) faisant saillie à l'extrémité dudit corps et des moyens (19) pour propulser ledit piston en réponse à une commande de déclenchement, comportant un agencement de freinage en retour (25), à seuil inertiel d'actionnement, s'exerçant entre la tige (17) et le corps (13) pour freiner ladite tige seulement lorsque celle-ci est soumise à une force de retour sous une accélération de valeur supérieure à une valeur de seuil, dans lequel
ledit agencement de freinage en retour comporte au moins une bille (27) logée dans une cavité annulaire (29) ménagée entre ladite tige et la paroi interne dudit corps, dans lequel
ladite cavité comporte deux tronçons adjacents dans le prolongement l'un de l'autre, un premier tronçon (35) proche du piston de hauteur radiale supérieure au diamètre de ladite bille et un second tronçon (38) de hauteur radiale décroissante à partir de l'extrémité dudit premier tronçon, ladite bille s'engageant dans ledit second tronçon lorsque ladite force de retour est appliquée à ladite tige (17) sous une accélération de valeur supérieure à la valeur de seuil précitée, ledit agencement de freinage comprenant en outre des moyens pour maintenir ladite bille dans ledit premier tronçon, au repos,
**caractérisé en ce que** lesdits moyens pour propulser ledit piston en réponse à une commande de déclenchement comportent un générateur de gaz à actionnement pyrotechnique (19), monté dans ledit corps en regard dudit piston, **en ce que**
lesdits moyens pour maintenir ladite bille dans ledit premier tronçon comprennent un manchon (70) engagé dans ladite cavité le long dudit second tronçon et coulissant contre la surface interne dudit corps (13), **en ce que** ce manchon est muni d'une collerette (72) située à l'extérieur de la cavité et en contact avec ladite tige à l'extérieur de la cavité par l'intermédiaire d'un élément de maintien (74) développant une force de cohésion limitée entre ladite collerette et ladite tige, et
**en ce que** l'agencement de freinage comprend en outre un ressort (40a) de force inférieure à ladite force de cohésion réunissant ladite collerette et ladite tige, sollicitant élastiquement ladite bille (27) vers ledit second tronçon de la cavité.

3. Vérin selon la revendication 2, **caractérisé en ce que** ledit élément de maintien (74) est un joint de friction annulaire.

4. Vérin selon l'une des revendications précédentes, **caractérisé en ce qu'**il comporte une pluralité de billes (27) agencées côte à côte, annulairement dans ladite cavité.

5. Vérin selon l'une des revendications précédentes, **caractérisé en ce qu'**il comporte en outre une masselotte annulaire (63) intercalée entre ledit piston et la ou les billes.

6. Vérin selon la revendication 4, **caractérisé en ce que** lesdites billes sont logées dans un support annulaire (78) formant barillet, monté mobile dans ladite cavité.

7. Vérin selon l'une des revendications précédentes, **caractérisé en ce qu'**il comporte une chambre d'expansion de gaz (21) entre le piston et ledit générateur de gaz et **en ce qu'**un orifice (49) de fuite, calibré, est pratiqué dans la paroi de cette chambre d'expansion.

## Patentansprüche

1. Zylinder mit Hubauslösung, umfassend einen Körper (13), der einen Kolben (15) beherbergt, der mit einer Stange (17) verbunden ist, die am Ende des Körpers vorspringt, und Mittel (19), um den Kolben als Antwort auf eine Auslösesteuerung vorzuschieben, umfassend eine Rückwärtsbremsanordnung (25) mit Trägheitsbetätigungsschwelle, die zwischen der Stange (17) und dem Körper (13) zur Wirkung kommt, um die Stange nur dann zu bremsen, wenn diese einer Rückwärtskraft unter einer Beschleunigung mit einem größeren Wert als ein Schwellenwert ausgesetzt ist, wobei
die Rückwärtsbremsanordnung mindestens eine Kugel (27) umfasst, die in einem ringförmigen Hohlraum (29) angeordnet ist, der zwischen der Stange und der Innenwand des Körpers ausgenommen ist, wobei
der Hohlraum zwei aneinandergrenzende Abschnitte in der Verlängerung zueinander umfasst, einen ersten Abschnitt (35) nahe dem Kolben mit einer radialen Höhe größer als der Durchmesser der Kugel und einen zweiten Abschnitt (38) mit einer radialen Höhe, die vom Ende des ersten Abschnitts abnehmend ist, wobei die Kugel in den zweiten Abschnitt eingreift, wenn die Rückwärtskraft an die Stange (17) unter einer Beschleunigung mit einem größeren Wert als der vorgenannte Schwellenwert angelegt wird, wobei die Bremsanordnung ferner Mittel umfasst, um die Kugel in dem ersten Abschnitt in Ruhestellung zu halten,
**dadurch gekennzeichnet, dass** die Mittel, um den Kolben als Antwort auf eine Auslösesteuerung anzutreiben, einen Gasgenerator mit pyrotechnischer Betätigung (19) umfassen, der in dem Körper gegenüber dem Kolben montiert ist, und
dass die Mittel, um die Kugel in dem ersten Abschnitt zu halten, eine Feder (40) umfassen, die in dem zweiten Abschnitt (38) installiert und zwischen der Kugel und einem Ende des Hohlraums zusammengedrückt montiert ist.

2. Zylinder mit Hubauslösung, umfassend einen Körper (13), der einen Kolben (15) beherbergt, der mit einer Stange (17) verbunden ist, die am Ende des Körpers vorspringt, und Mittel (19), um den Kolben als Antwort auf eine Auslösesteuerung vorzuschieben, umfassend eine Rückwärtsbremsanordnung (25) mit Trägheitsbetätigungsschwelle, die zwischen der Stange (17) und dem Körper (13) zur Wirkung kommt, um die Stange nur dann zu bremsen, wenn diese einer Rückwärtskraft unter einer Beschleunigung mit einem größeren Wert als ein Schwellenwert ausgesetzt ist, wobei
die Rückwärtsbremsanordnung mindestens eine Kugel (27) umfasst, die in einem ringförmigen Hohlraum (29) angeordnet ist, der zwischen der Stange und der Innenwand des Körpers ausgenommen ist, wobei
der Hohlraum zwei aneinandergrenzende Abschnitte in der Verlängerung zueinander umfasst, einen ersten Abschnitt (35) nahe dem Kolben mit einer radialen Höhe größer als der Durchmesser der Kugel und einen zweiten Abschnitt (38) mit einer radialen Höhe, die vom ende des ersten Abschnitts abnehmend ist, wobei die Kugel in den zweiten Abschnitt eingreift, wenn die Rückwärtskraft an die Stange (17) unter einer Beschleunigung mit einem größeren Wert als der vorgenannte Schwellenwert angelegt wird, wobei die Bremsanordnung ferner Mittel umfasst, um die Kugel in dem ersten Abschnitt in Ruhestellung zu halten,
**dadurch gekennzeichnet, dass** die Mittel, um den Kolben als Antwort auf eine Auslösesteuerung anzutreiben, einen Gasgenerator mit pyrotechnischer Betätigung (19) umfassen, der in dem Körper gegenüber dem Kolben montiert ist, und dass
die Mittel, um die Kugel in dem ersten Abschnitt zu halten, eine Hülse (70) umfassen, die in dem Hohlraum entlang des zweiten Abschnitts in Eingriff ist und gegen die Innenfläche des Körpers (13) gleitet, dass diese Hülse mit einem Kragen (72) versehen ist, der sich außerhalb des Hohlraums befindet und mit der Stange außerhalb des Hohlraums mit Hilfe eines Halteelements (74) in Kontakt ist, das eine begrenzte Kohäsionskraft zwischen dem Kragen und der Stange entwickelt, und
dass die Bremsanordnung ferner eine Feder (40a) mit einer geringeren Kraft als die Kohäsionskraft, die den Kragen und die Stange verbindet, umfasst, die die Kugel (27) elastisch zu dem zweiten Abschnitt des Hohlraums drückt.

3. Zylinder nach Anspruch 2, **dadurch gekennzeichnet, dass** das Halteelement (74) eine ringförmige Friktionsdichtung ist.

4. Zylinder nach einem der vorhergehenden Ansprüche, **dadurch gekennzeichnet, dass** sie eine Vielzahl von Kugeln (27) umfasst, die Seite an Seite ringförmig in dem Hohlraum angeordnet sind.

5. Zylinder nach einem der vorhergehenden Ansprüche, **dadurch gekennzeichnet, dass** er ferner ein ringförmiges Reglergewicht (63) umfasst, das zwischen dem Kolben und der oder den Kugeln angeordnet ist.

6. Zylinder nach Anspruch 4, **dadurch gekennzeichnet, dass** die Kugeln in einem ringförmigen Träger (78) der ein Gehäuse bildet, das in dem Hohlraum beweglich montiert ist, angeordnet sind.

7. Zylinder nach einem der vorhergehenden Ansprüche, **dadurch gekennzeichnet, dass** es eine Gasexpansionskammer (21) zwischen dem Kolben und dem Gasgenerator umfasst, und dass eine kalibrierte Leckageöffnung (49) in der Wand dieser Expansionskammer vorgesehen ist.

## Claims

1. An activated-stroke actuator of the type comprising a body (13) housing a piston (15) connected to a rod (17) projecting at the end of said body and means (19) for propelling said piston in response to an activation command, comprising a return-braking arrangement (25), with an inertial actuating threshold, acting between the brake (17) and the body (13) in order to brake said rod only when it is subjected to a return force under an acceleration with a value above a threshold value, in which
said return-braking arrangement comprises at least one ball (27) housed in an annular cavity (29) formed between said rod and the inner wall of said body, in which
said cavity comprises two adjacent portions in the continuation of one another, a first portion (35) close to the piston and having a radial height greater than the diameter of said ball, and a second portion (38) having a radial height which decreases from the end of said first portion, said ball engaging in said second portion when said return force is applied to said rod (17) under an acceleration with a value above the aforementioned threshold value, said braking arrangement additionally comprising means for retaining said ball in said first portion, at rest,
**characterized in that** said means for propelling said piston in response to an activation command comprise a gas generator (19) with pyrotechnic actuation mounted in said body opposite said piston, and
**in that** said means for retaining said ball in said first portion comprise a spring (40) installed in said second portion (38) and mounted in compression between said ball and one end of said cavity.

2. An activated-stroke actuator of the type comprising a body (13) housing a piston (15) connected to a rod (17) projecting at the end of said body and means (19) for propelling said piston in response to an activation command, comprising a return-braking arrangement (25), with an inertial actuating threshold, acting between the brake (17) and the body (13) in order to brake said rod only when it is subjected to a return force under an acceleration with a value above a threshold value, in which
said return-braking arrangement comprises at least one ball (27) housed in an annular cavity (29) formed between said rod and the inner wall of said body, in which
said cavity comprises two adjacent portions in the continuation of one another, a first portion (35) close to the piston and having a radial height greater than the diameter of said ball, and a second portion (38) having a radial height which decreases from the end of said first portion, said ball engaging in said second portion when said return force is applied to said rod (17) under an acceleration with a value above the aforementioned threshold value, said braking arrangement additionally comprising means for retaining said ball in said first portion, at rest,
**characterized in that** said means for propelling said piston in response to an activation command comprise a gas generator (19) with pyrotechnic actuation mounted in said body opposite said piston, **in that**
said means for retaining said ball in said first portion comprise a sleeve (70) fitted into said cavity along said second portion and sliding against the inner surface of said body (13), **in that** this sleeve is provided with a collar (72) situated outside the cavity and in contact with said rod outside the cavity via a retaining element (74) developing a limited cohesion force between said collar and said rod, and
**in that** the braking arrangement additionally comprises a spring (40a) with a force below said cohesion force connecting said collar and said rod, elastically urging said ball (27) toward said second portion of the cavity.

3. The actuator according to claim 2, **characterized in that** said retaining element (74) is an annular friction seal.

4. The actuator according to one of the preceding claims, **characterized in that** it comprises a plurality of balls (27) arranged side by side, annularly in said cavity.

5. The actuator according to one of the preceding claims, **characterized in that** it additionally comprises an annular weight (63) interposed between said piston and the ball or balls.

6. The actuator according to claim 4, **characterized in that** said balls are housed in a barrel-forming annular support (78) mounted movably in said cavity.

7. The actuator according to one of the preceeding claims, **characterized in that** it comprises a gas expansion chamber (21) between the piston and said gas generator, and **in that** a leakage orifice (49), which is calibrated, is made in the wall of this expansion chamber.
